# EUROPÄISCHE PATENTSCHRIFT

(11) **EP 0 950 381 B1**
(45) Veröffentlichungstag und Bekanntmachung des Hinweises auf die Patenterteilung: **01.09.2004**
(21) Anmeldenummer: 98810128.3
(22) Anmeldetag: 18.02.1998
(51) Int. Cl.: A61C 3/06

(54) **Zahnärztliche Vorrichtung mit Schleifscheibe und Spindel und Verfahren zur Herstellung einer Schleifscheibe**
Dental device with abrasive disc and mandrel and method for the manufactoring of an abrasive disc
Dispositif dentaire avec disque abrasif et mandrin ainsi qu'une méthode de fabrication d'un disque abrasif

(43) Veröffentlichungstag der Anmeldung: 20.10.1999
(73) Patentinhaber: HAWE NEOS DENTAL Dr. H. V. WEISSENFLUH AG, 6934 Bioggio (CH)
(72) Erfinder: von Weissenfluh, Hans, 6573 Magadino (CH); Kilcher, Beat, 6935 Bosco Luganese (CH); von Weissenfluh, Beat A., 6925 Gentilino (CH)
(74) Vertreter: AMMANN PATENTANWAELTE AG BERN

(56) Entgegenhaltungen:
- WO-A-88/00029
- US-A- 2 842 844
- US-A- 3 858 368
- US-A- 4 624 876
- US-A- 4 988 294

## Beschreibung

Die vorliegende Erfindung bezieht sich auf eine zahnärztliche Vorrichtung mit Schleifscheibe und Spindel gemäss Oberbegriff von Patentanspruch 1 und auf ein Verfahren zur Herstellung einer Schleifscheibe.

Eine derartige Vorrichtung ist aus der US-A-3 858 368 bekannt, bei welcher das rechteckige Ende einer Spindel eine Axialsicherung in Form von umlaufenden Nuten aufweist, in die Wülste in einem Sackloch eines ebenfalls rechteckigen Verbindungsstücks der Schleifscheibe greifen, wodurch eine Verdrehsicherung hergestellt ist.

Es sind eine Vielzahl von weiteren zahnärztlichen Geräten bekannt, die für die Bearbeitung von Zahnfüllungen verwendet werden, wobei dies gewöhnlich in mehreren Schritten von der Grobbearbeitung bis zum Polieren erfolgt. Dazu ist es erforderlich, verschiedene Schleifscheiben zu verwenden und dafür gibt es verschiedene Vorrichtungen, bei denen der Werkzeugwechsel einfach und rasch durchgeführt werden kann, wobei sich Systeme mit kraftschlüssiger oder mit formschlüssiger Verbindung bewährt haben.

Aus der US-A-4 889 489 ist eine zahnärztliche Vorrichtung bekannt, bei der die Spindel ein vierkantiges Ende aufweist und die Nabe der Schleifscheibe entsprechend eine vierseitige Öffnung aufweist, um eine formschlüssige Kupplung zu erreichen. Dadurch kann ein höheres Drehmoment erzielt werden, was dadurch erkauft wird, dass die Schleifscheibe beim Aufsetzen stets korrekt zur Stellung der Spindel ausgerichtet sein muss.

Aus der US-A-4 988 294 ist eine weitere zahnärztliche Vorrichtung bekannt, bei der das freie Ende der Spindel rotationssymmetrisch ausgebildet und geschlitzt ist, um eine ebenfalls rotationssymmetrisch ausgebildete, harte Nabe aufzunehmen. Das geschlitzte Ende der Spindel wird durch die durch Rotation erzeugte Fliehkraft gespreizt, so dass die Scheibe dadurch gehalten wird. Jedoch kann dadurch nur ein geringes Drehmoment übertragen werden, während die Scheibe in jeder Stellung auf das Spindelende aufgesteckt werden kann.

Es ist von diesem Stand der Technik ausgehend Aufgabe der vorliegenden Erfindung eine zahnärztliche Vorrichtung anzugeben, die die oben beschriebenen Vorteile wie einfache Aufsteckbarkeit aufweist und die Nachteile der geringen Drehmoment-Uebertragung vermeidet. Diese Aufgabe wird mit der Vorrichtung gemäss Patentanspruch 1 gelöst.

Es ist eine weitere Aufgabe der vorliegenden Erfindung, die Herstellung einer Schleifscheibe zu vereinfachen, wobei diese Aufgabe mit dem Verfahren gemäss dem unabhängigen Anspruch 7 gelöst wird.

Weitere Vorteile und Ausbildungen sind in den abhängigen Ansprüchen definiert.

Die Erfindung wird im folgenden anhand einer Zeichnung von Ausführungsbeispielen näher erläutert.
- Figur 1: zeigt eine Draufsicht auf eine erfindungsgemässe Schleifscheibe,
- Figur 2: zeigt einen Schnitt gemäss der Linie II-II in Figur 1,
- Figur 3: zeigt die auf eine Spindel aufgesteckte Schleifscheibe von Figur 1,
- Figur 4: zeigt ein erstes Ausführungsbeispiel einer Spindel in perspektivischer Sicht,
- Figur 5: zeigt ein zweites Ausführungsbeispiel einer Spindel in perspektivischer Sicht,
- Figuren 6 bis 8: zeigen drei Verfahrensschritte der Herstellung der erfindungsgemässen Schleifscheibe.

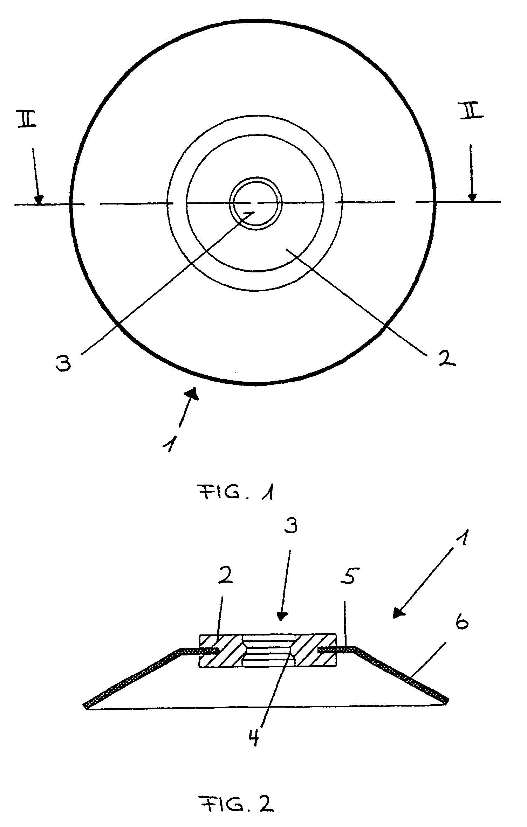

Die Schleifscheibe 1 weist eine Nabe 2 auf, die eine Nabenöffnung 3 aufweist, die rund und daher rotationssymmetrisch ausgebildet ist. Aus Figur 2 ist ersichtlich, dass die Nabenöffnung 3 in der Mitte einen umlaufenden Wulst 4 aufweist, so dass der Durchmesser beim Wulst kleiner ist als der Durchmesser der übrigen Nabenöffnung 3. Die Nabe besteht aus einem nachgiebigen und federnden Kunststoff und ist spiegelsymmetrisch zu der Ebene, in welcher die Scheibe liegt, ausgeführt.

In vorliegendem Ausführungsbeispiel ist die Schleifscheibe nicht eben ausgeführt wie in den eingangs zitierten Patentschriften, sondern bombiert, wobei die abrasive Beschichtung entweder auf der konkaven oder auf der konvexen Seite angebracht sein kann oder auf beiden Seiten, gegebenenfalls mit abrasiven Körnern mit verschiedenen Durchmessern.

Im Ausführungsbeispiel gemäss Figur 2 ist die Bombierung der Schleifscheibe 1 nicht stetig und dem etwa ebenen Teil 5 im Zentrum schliesst sich ein abgeknickter Teil 6 an. Es ist jedoch auch möglich, die Bombierung stetig auszuführen. Dabei kann der Radius der Bombierung für beide Arten innerhalb eines Bereichs von 8 bis 20 mm liegen, vorzugsweise bei 14 mm. Die Scheiben können beispielsweise eine Dicke von 0,05 bis 0,5 mm und einen Durchmesser von 8 bis 20 mm aufweisen. Die Nabenöffnung kann beispielsweise einen Durchmesser von 2,25 mm aufweisen, während die Nabendicke 1 bis 1,5 mm betragen kann. Als Material für die Schleifscheiben-Unterlage kann eine relativ steife Folie aus Polyester verwendet werden, wodurch es möglich ist, die Schleifscheibe durchzubiegen, derart, dass die vorher konkave Seite konvex wird und umgekehrt.

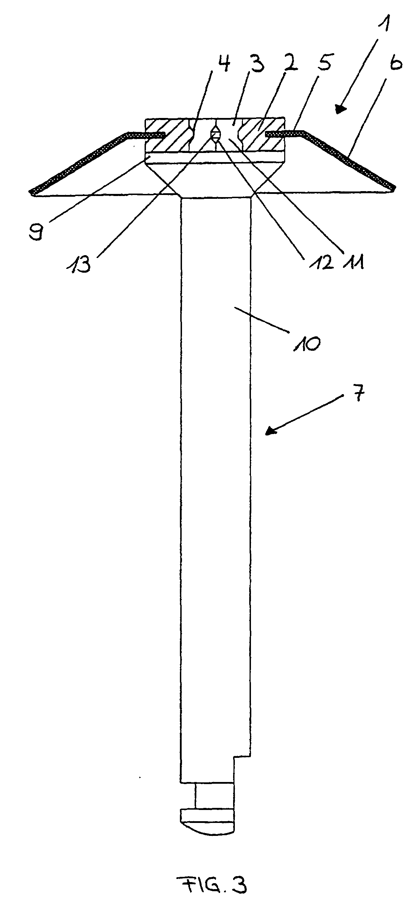

In Figur 3 ist eine Spindel 7 mit aufgesteckter Schleifscheibe dargestellt, wobei das Aufnahme-Ende der Spindel mit einem Zwingenkopf 8 versehen ist. Als Material wird ein relativ harter Kunststoff oder Metall bevorzugt. Der Zwingenkopf 8 weist eine scheibenförmige Auflagefläche 9 auf, deren Durchmesser grösser ist als derjenige des Spindelschaftes 10. Die Zwinge 11 weist an ihrer Oberfläche als Verdrehsicherung 12 dienende Mittel auf, um eine gute Drehmoment-Uebertragung zu gewährleisten. In Beispiel gemäss Figur 4 ist die Zwinge 8 mit einem rechteckigen oder quadratischen Querschnitt versehen, so dass die Kanten des Rechteckes als Verdrehsicherung 12 dienen.

Zur Aufnahme des Wulstes 4 in der Nabenöffnung sind an der Zwinge 11 als Axialsicherung dienende Einbuchtungen 13 vorgesehen, die in vorliegendem Fall an der Verdrehsicherung 12 angebracht sind, wobei der Wulst 4 in der Nabenöffnung und die Einbuchtungen 13 so aufeinander abgestimmt sind, dass der Wulst im aufgesteckten Zustand in die Einbuchtungen einrastet und somit die Scheibe in axialer Richtung auf der Zwinge sichert. Ausserdem ist der grösste durch die Verdrehsicherung gebildete Durchmesser der Zwinge grösser als der grösste Durchmesser der Bohrung 3 der Nabe 2, so dass sich die Ecken und Kanten, bzw. die Verdrehsicherung 12 unter Ausnutzung der Elastizität der Nabe in die Öffnung derselben eingraben und somit die Scheibe gegen ein Verdrehen gegenüber der Spindel sichern. Ausserdem ist die Länge der Zwinge derart gewählt, dass sie im zusammengesteckten Zustand nicht über die Scheibennabe hervorragt.

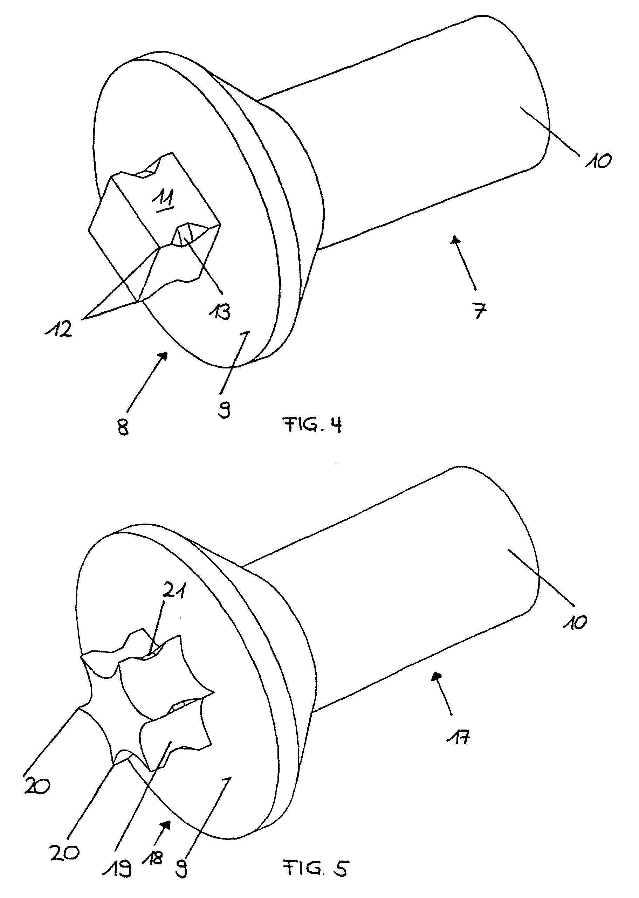

Es ist aber auch möglich, anstatt eines Vierkants einen Drei- oder Mehrkant oder andere Verdrehsicherungs-Mittel vorzusehen. In der Ausführungsvariante gemäss Figur 5 erkennt man den Spindelkopf 18, dessen Zwinge 19 im Querschnitt beispielsweise sternförmig ausgebildet ist, wobei die Kanten 20 als Verdrehsicherung dienen und in diesen Kanten Einbuchtungen 21 als Axialsicherung ausgebildet sind.

Dadurch kann die Scheibe unabhängig von deren Orientierung in Bezug auf die Spindel aufgesteckt werden, während gleichzeitig die dadurch bedingte Verbindung, die sowohl eine formschlüssige als auch eine kraftschlüssige Verbindung ist, eine sichere Übertragung des Drehmomentes gewährleistet. Des weiteren erlaubt die Spiegelsymmetrie der Nabe das Aufstecken der Scheibe sowohl von der einen als auch von der anderen Seite.

Durch die erfindungsgemässe Ausbildung der Schleifscheibe ist es ausserdem möglich, deren Herstellung zu vereinfachen. Sowohl die Scheibe als auch die Kunststoff-Nabe können getrennt voneinander vorgefertigt und dann miteinander verbunden werden; dies im Unterschied zum Herstellungsverfahren der Scheibe gemäss US-A-4 889 489, bei dem die Nabe auf die Scheibe aufgespritzt wird.

Die vorgefertigte Nabe 2 gemäss Figur 6 enthält eine Auflagefläche 14, die Nabenöffnung 3 sowie den Wulst 4 in der Nabenöffnung und einen in etwa der Scheibendicke entsprechenden Abstand von der Auflagefläche angeordneten Klemmteil 15. Die Scheibe wurde aus einem mit Abrasivstoffen beschichteten Band ausgestanzt und mit einer die Nabe aufnehmende Öffnung 16 versehen.

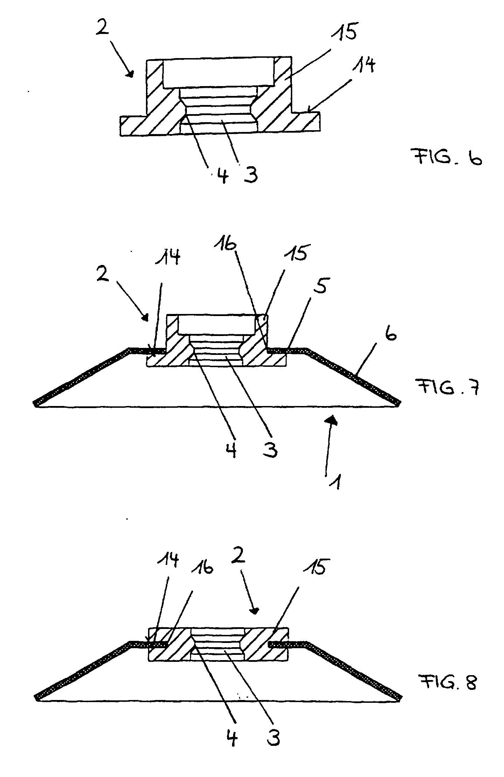

Für das Zusammenfügen wird gemäss den Figuren 7 und 8 die vorgefertigte Nabe von der einen Seite der Scheibe bis zur Auflagefläche 14 in die Öffnung 16 der Scheibe gesteckt und mittels thermischer Verformung wird die Klemmseite 15 der Nabe auf die Scheibe gebracht und mit dieser mechanisch verankert. Sämtliche Arbeitsschritte können mit relativ geringem Aufwand maschinell und vollautomatisch durchgeführt werden, wobei dies den Einsatz von herkömmlichen und einfachen Werkzeugen und Maschinen erlaubt.

Im beschriebenen Ausführungsbeispiel sind bombierte Scheiben aufgeführt, doch ist es eingänglich, dass sowohl die Verbindungsart Scheibe-Spindel als auch das Verfahren zur Herstellung der Scheiben ebenso gut für ebene Scheiben gelten.

## Patentansprüche

1. Zahnärztliche Vorrichtung mit einer Schleifscheibe (1) mit Nabe (2) und einer Spindel (7) mit Zwinge (11), wobei die Öffnung (3) in der Nabe (2) und der Querschnitt der Zwinge (11) ausgebildet sind, die Schleifscheibe auf der Zwinge abnehmbar zu befestigen und die Nabe einen Innenwulst zur Aufnahme der Axialsicherung und die Zwinge sowohl eine Verdrehsicherung als auch eine Axialsicherung aufweist, **dadurch gekennzeichnet, dass** die runde, durchgehende Öffnung (3) der Nabe (2) aus einem nachgiebigen und federnden Kunststoff und die Zwinge (11, 19) aus einem härteren Kunststoff oder aus Metall gefertigt ist, wobei der grösste Durchmesser der Zwinge an der Stelle der Verdrehsicherung (12, 20) grösser ist als der Durchmesser der Nabenöffnung (3) an der Stelle des Wulstes (4).

2. Vorrichtung nach Anspruch 1, **dadurch gekennzeichnet, dass** die Verdrehsicherung (12, 20) längs der Zwinge verlaufende Kanten enthält.

3. Vorrichtung nach Anspruch 1 oder 2, **dadurch gekennzeichnet, dass** die Zwinge (11, 19) im Querschnitt ein Mehreck ist und die aus Einbuchtungen (13, 21) bestehende Axialsicherung in dessen Kanten angeordnet sind.

4. Vorrichtung nach einem der Ansprüche 1 bis 3, **dadurch gekennzeichnet, dass** die Scheibe eben oder die Scheibe (1) bombiert ist.

5. Vorrichtung nach Anspruch 4, **dadurch gekennzeichnet, dass** die Scheibe eine stetige Bombierung oder dass die Scheibe (1) im Zentrum ein ebenes Teil (5) mit einem anschliessenden geknickten Teil (6) aufweist.

6. Vorrichtung nach Anspruch 4 oder 5, **dadurch gekennzeichnet, dass** die Dicke der Scheibe und deren Material derart ausgewählt sind, dass die Bombierung umkehrbar ist, so dass die konkave Seite zur konvexen Seite werden kann, und umgekehrt.

7. Verfahren zur Herstellung einer Schleifscheibe mit Nabe gemäss einem der Ansprüche 1, 4 bis 6, **dadurch gekennzeichnet, dass** die Nabe (2) aus Kunststoff und die Scheibe (1) mit einer zentralen Öffnung (16) getrennt hergestellt und dann miteinander verbunden werden, wobei die Nabe eine Auflagefläche (14) und davon beabstandet eine Befestigungsfläche (15) aufweist und nach Durchstecken der Nabe durch die Öffnung (16) bis zur Anlage an die Auflagefläche (14) die Befestigungsfläche (15) thermisch auf die Scheibe gebracht und anschliessend mit ihr mechanisch verankert wird.

## Claims

1. Dental device including an abrasive disk (1) with a hub (2) and a mandrel (7) with a clamping member (11), the opening (3) in the hub (2) and the cross-section of the clamping member (11) being designed for allowing a removeable attachment of the abrasive disk to the clamping member and the hub comprising an internal bead for the reception of the axial securing means and the clamping member comprising a rotational locking means as well as an axial securing means, **characterised in that** round throughgoing opening (3) of the hub (2) is made of a resilient and elastic synthetic material and the clamping member (11, 19) is made of a harder synthetic material or of metal, whereby the greatest diameter of the clamping member at the spot of the rotational locking means (12, 90) is greater than the diameter of the hub opening (3) at the spot of the bead (4).

2. Device according to claim 1, **characterised in that** the rotational locking means (12, 20) include edges extending in the longitudinal direction of the mandrel.

3. Device according to claim 1 or 2, **characterised in that** the clamping member (11, 19) is polygonal in cross-section and the axial securing means consisting of recesses (13, 21) are located in the edges thereof.

4. Device according to one of claims 1 to 3, **characterised in that** the disk is plane or the disk (1) is cambered.

5. Device according to claim 4, **characterised in that** the camber of the disk is continuous or the disk (1) comprises a plane portion (5) at its center and followed by an angled portion (6).

6. Device according to claim 4 or 5, **characterised in that** the thickness of the disk and its material are chosen such that the camber is reversible so that the concave side may become the convex side and vice versa.

7. Method for the manufacture of a abrasive disk with hub according to claims 1, 4 to 6, **characterised in that** the hub (2) is produced from a synthetic material and the disk (1) is separately produced with a central opening (16) and these parts are subsequently connected to each other, the hub having a bearing surface (14) and a fastening surface (15) located at a distance from the former, and after having inserted the hub through the opening (16) until it contacts the bearing surface (14) the fastening surface (15) is thermally applied to the disk and subsequently mechanically anchored thereto.

## Revendications

1. Dispositif dentaire comprenant un disque abrasif (1) avec moyeu (2) et un mandrin (7) avec attache (11), l'ouverture (3) dans le moyeu (2) et la coupe transversale de l'attache (11) présentant une configuration afin de permettre une fixation amovible du disque abrasif sur le l'attache, l'ouverture du moyeu présentant un bourrelet intérieur pour recevoir des moyens de blocage axial et l'attache comprenant des moyens de blocage axial aussi bien que des moyens de blocage en rotation, **caractérisé en ce que** l'ouverture traversant (3) du moyeu (2) est constitué d'un matériau synthétique souple et élastique et l'attache (11, 19) d'un matériau synthétique plus dur ou d'un métal, le plus grand diamètre de l'attache à l'endroit des moyens de blocage en rotation étant supérieur au diamètre de l'ouverture du moyeu (3) à l'endroit du bourrelet (4).

2. Dispositif selon la revendication 1, **caractérisé en ce que** les moyens de blocage en rotation (12, 20) comportent des arêtes s'étendant en direction longitudinale du mandrin.

3. Dispositif selon la revendication 1 ou 2, **caractérisé en ce que** l'attache (11, 19) est de coupe transversale polygonale, et que les moyens de blocage axial constitués d'évidements (13, 21) sont agencés dans les arêtes de celle-ci.

4. Dispositif selon l'une des revendications 1 à 3, **caractérisé en ce que** le disque est plat ou le disque (1) est bombé.

5. Dispositif selon la revendication 4, **caractérisé en ce que** le disque présente un bombage continu, ou que le disque (1) présente une partie plate (5) centrale suivie d'une partie coudée (6).

6. Dispositif selon la revendication 4 ou 5, **caractérisé en ce que** l'épaisseur du disque et le matériau de celui-ci sont choisis de telle manière que le bombage est réversible, de sorte que le côté concave peut devenir le côté convexe et vice-versa.

7. Procédé de fabrication d'un disque selon les revendications 1, 4 à 6, **caractérisé en ce que** le moyeu (2) est fabriqué en matière synthétique et le disque (1) est fabriqué séparément avec une ouverture (16) centrale, les deux éléments étant ensuite réunis, le moyeu présentant une surface d'appui (14) et une surface de fixation (15) située à un écart de celle-là, et après avoir inséré le moyeu dans l'ouverture (16) jusqu'à ce qu'il contacte la surface d'appui (14), la surface de fixation (15) étant appliquée sur le disque par voie thermique et mécaniquement ancrée sur celui-ci .
